# EUROPÄISCHE PATENTANMELDUNG

(11) **EP 2 989 900 A1**
(43) Veröffentlichungstag der Anmeldung: **02.03.2016**
(21) Anmeldenummer: 15163598.4
(22) Anmeldetag: 14.04.2015
(51) Int. Cl.: A23L 13/40, A23L 5/40, A23L 5/42, C09B 61/00

(54) **TEMPERATURSTABILE FORMULIERUNG MIT NATÜRLICHEM FARBSTOFF FÜR LEBENSMITTEL**

(30) Priorität: 08.08.2014 EP 14180407
(71) Anmelder: Deutsches Institut für Lebensmitteltechnik e.V., 49610 Quakenbrück (DE)
(72) Erfinder: Bindrich, Ute, 49610 Quakenbrück (DE)
(74) Vertreter: Taruttis, Stefan Georg

(57) **Zusammenfassung**

Die Erfindung betrifft eine temperaturstabile Formulierung mit einem wasserlöslichen natürlichen Farbstoff, die eine Wasser-in-Öl-Emulsion ist, in der der Farbstoff in der wässrigen Phase enthalten ist und bei erhöhter Temperatur, z.B. bei zumindest 72 °C stabil ist. Der Farbstoff kann bei dem pH des Lebensmittels thermisch instabil sein, in das die Formulierung eingemischt ist.

## Beschreibung

Die Erfindung betrifft eine temperaturstabile Formulierung mit einem natürlichen Farbstoff zur Verwendung als Farbstoff für Lebensmittel, die zumindest einen hydrophilen Farbstoff in einer wässrigen Phase enthält, sowie Lebensmittel mit der Formulierung. Der Farbstoff kann in der wässrigen Phase suspendierbar oder löslich sein und ist bevorzugt ein natürlicher Farbstoff, z.B. ein Pflanzenextrakt, Extrakt aus Roten Beeten, Betanin, Extrakt aus grünen Pflanzen, z.B. Extrakt aus Petersilie, Chlorophyll, oder Sepia aus Tintenfischen. Weiter betrifft die Erfindung ein Verfahren zur Herstellung der Formulierung und Verfahren zur Herstellung von Lebensmitteln, die die Formulierung enthalten.

Die Formulierung hat den Vorteil, dass darin wärmeempfindliche Farbstoffe gegen erhöhte Temperaturen in Lebensmitteln beständig sind, die einen pH-Wert aufweisen, bei dem sich der Farbstoff außerhalb der Formulierung bei erhöhter Temperatur zersetzt. Z.B. erreicht die Farbstoffzusammensetzung die Stabilität von Betanin in Wurstbrät gegen Temperaturen von 72°C, wie sie beim Pasteurisieren auftreten.

### Stand der Technik

Die EP 1 972 206 B1 beschreibt eine Farbstoffzusammensetzung, die eine Öl-in-Wasser-Emulsion ist, bei der die Ölphase aus einem fettlöslichen Carotinoid-Farbstoff gebildet ist und als Emulgatoren 45-55 Gew.-% Lecithin und 55-45 Gew.-% eines Saccharose-Fettsäureesters enthält. Diese Farbstoffzusammensetzung soll eine hohe Säurestabilität aufweisen und für Fruchtzusammensetzungen, fruchtig aromatisiertes Milchprodukt ohne Ei oder fruchtige Süßwaren geeignet sein.

Die EP 1 180 332 B1 beschreibt den Zusatz des Rote-Beete-Farbstoffs Betanin als thermisch instabilen Farbstoff zu einem von tierischen Bestandteilen freien proteinhaltigen Lebensmittel, der durch Erwärmen auf ca. 50°C zerstört wird, sowie den Zusatz von reduzierendem Zucker für eine thermische Bräunungsreaktion.

Die GB 669,363 beschreibt die Herstellung grüner Überzugsmasse aus in Wasser gelöstem Brilliantblau und Tartrazin, dem Lecithin zugesetzt wurde und anschließend zunächst Kokosnussöl und dann Puderzucker, Milchpulver und Citronensäure zugemischt wurden.

### Aufgabe der Erfindung

Der Erfindung stellt sich die Aufgabe, eine Zusammensetzung und ein Verfahren zu deren Herstellung bereitzustellen, in der natürliche temperaturempfindliche Farbstoffe gegen erhöhte Temperaturen stabil sind, insbesondere in einem Lebensmittel, das ein pH-Wert aufweist, bei dem der Farbstoff bei erhöhter Temperatur instabil ist.

### Beschreibung der Erfindung

Die Erfindung löst die Aufgabe mit den Merkmalen der Ansprüche, insbesondere mit einer temperaturstabilen Formulierung mit einem Farbstoff, die eine Wasser-in-Öl-Emulsion ist, in der der Farbstoff in der wässrigen Phase enthalten ist und bei erhöhter Temperatur, z.B. oberhalb von 50°C, bevorzugt oberhalb von 60°C oder oberhalb von 70°C, bevorzugter bei zumindest 72 °C stabil ist.

Der Farbstoff ist bevorzugt einer, der bei dem pH des Lebensmittels thermisch instabil ist, in das die Formulierung eingemischt ist. Der Farbstoff ist insbesondere wasserlöslich, und bevorzugt ein natürlicher Farbstoff, z.B. Farbstoff aus Roter-Beete, insbesondere E476, oder grüner Pflanzenextrakt, z.B. Petersilienextrakt.

Die Formulierung zeichnet sich dadurch aus, dass der enthaltene Farbstoff darin gegen erhöhte Temperaturen stabil ist, insbesondere wenn die Formulierung in einem Lebensmittel enthalten ist, bei dessen pH-Wert der Farbstoff außerhalb der Formulierung thermisch instabil ist. Daher betrifft die Erfindung auch Lebensmittel, die die Formulierung enthalten und auf eine erhöhte Temperatur gebracht worden sind, z.B. pasteurisiert sind. Für den Rote-Beete-Farbstoff Betanin als Farbstoff sind bevorzugt Lebensmittel insbesondere Fleisch- und Wurstwaren, insbesondere Brühwurst. Für grüne Pflanzenfarbstoffe, insbesondere Chlorophyll, z.B. Extrakt aus Grünpflanzen, insbesondere aus Petersilie, sind bevorzugte Lebensmittel solche mit einem pH-Wert unter 7, z.B. mit einem pH von 7 bis 8, z.B. Lebensmittel auf Basis von oder aus pflanzlichen Bestandteilen, die angesäuert sein können, z.B. Frucht- und Gemüsezubereitungen, z.B. auf Basis von oder aus Avocado, Gurke und/oder Paprika.

Der natürliche Farbstoff aus Roter Beete, als Pulver oder Extrakt von Roter Beete, bzw. Betanin, ist bei höheren Temperaturen instabil, insbesondere in Lebensmitteln, die einen pH-Wert größer 5,5 aufweisen, wie z.B. Fleisch- und Wurstwaren.

Grüne Pflanzenextrakte als natürlicher Farbstoff haben den Nachteil, im sauren Milieu gegen höhere Temperaturen instabil zu sein.

Die wässrige Phase der Formulierung weist einen pH-Wert auf, bei dem der Farbstoff gegen erhöhte Temperaturen stabil ist. Es hat sich gezeigt, dass diese wässrige Phase innerhalb der Ölphase stabil ist und eine Temperaturbehandlung eines Lebensmittels, in dem diese Formulierung enthalten ist, auch dann den Farbstoff im Wesentlichen nicht zersetzt, insbesondere ohne Farbeinbußen enthält, wenn das Lebensmittel einen pH-Wert aufweist, bei dem der Farbstoff bei der erhöhten Temperatur instabil ist.

Dabei sind erhöhte Temperaturen generell bevorzugt solche Temperaturen, bei denen Lebensmittel pasteurisiert werden, z.B. 65 bis 72°C, insbesondere für 10 bis 180 min.

Bei Wurst- und Fleischwaren, z.B. Brühwurst, hat die erfindungsgemäße Formulierung den Vorteil, dass die Färbung einen geringeren Gehalt an Nitrat und/oder Nitrit ermöglicht, da eine Farbstabilisierung durch Nitrat und/oder Nitrit nicht erforderlich ist, sondern die durch erhöhte Temperaturen verursachte blasse Färbung durch die Formulierung ersetzt bzw. ausgeglichen wird. So kann in Fleisch- und/oder Wurstwaren , die einem Gehalt an Formulierung aufweisen, der Gehalt bzw. Zusatz an Nitrat und/oder Nitrit um 40 bis 50 % reduziert sein. Bei der Herstellung von Fleisch- und/oder Wurstwaren, denen die Formulierung zugesetzt wird, kann daher die zugegebene Menge an Nitrat/Nitrit, z.B. in Form von Nitritpökelsalz, um 40 bis 50 % reduziert werden, wobei vorzugsweise Speisesalz in einer Menge zugegeben wird, die die verringerte Menge Nitritpökelsalz ausgleicht, z.B. Speisesalz in einer Menge entsprechend 60 bis 50 % der Menge Nitritpökelsalz.

Die Formulierung zeichnet sich auch dadurch aus, dass die Tröpfchen der wässrigen Phase in der Ölphase einen mittleren Durchmesser von maximal 2µm, bevorzugt maximal 1,5 µm, bevorzugter maximal 1 µm, noch bevorzugter maximal 0,8 µm, insbesondere mit einer geringen Breite der Größenverteilung aufweisen, bevorzugt mit einer Größenverteilung von X₉₀ bis X₁₀ von maximal 20 µm, bevorzugter von maximal 15 µm, noch bevorzugter von maximal 10 µm. Diese Größenverteilung hat den Vorteil, eine gleichmäßige Färbung bei Verteilung innerhalb des Lebensmittels zu ermöglichen. Bei Fleisch- und Wurstwaren hat diese Größenverteilung den Vorteil, dass die Formulierung einer Fleischmasse während des Kutterns zugesetzt werden kann, da die Farbstoffformulierung während des Kutterns im Wesentlichen stabil bleibt. Dies wird gegenwärtig darauf zurückgeführt, dass die geringe Größe der Tröpfchen der wässrigen Phase der Formulierung eine mechanische Zerstörung der Tröpfchen vermeidet.

Entsprechend wird die Farbstoffformulierung bei der Herstellung von Fleisch- und Wurstwaren bevorzugt während des Kutterns der Fleischmasse zugesetzt, um während des Kutterns in der Fleischmasse verteilt zu werden.

Ein Vorteil der Formulierung liegt darin, dass ihr Zusatz bei der Herstellung von Fleisch- und Wurstwaren einen verringerten Zusatz von Pökelsalz erlaubt, das Nitrit und/oder Nitrat enthält und hier auch als Nitritpökelsalz bezeichnet wird. Denn die Formulierung kann die durch Umrötung mittels Nitritpökelsatz erzeugte Färbung von Fleisch- und Wurstwaren zumindest zum Teil ersetzen. Generell kann daher bei der Herstellung von Fleisch- und Wurstwaren mit Zusetzen der Formulierung der Zusatz an Nitritpökelsalz um 40 bis 50 % reduziert werden, z.B. bei Nitritpökelsalz, das 0,5 Gew.-% Natrimnitrit enthält, von ca. 1,6 bis 2,0 Gew.-%, insbesondere von 1,8 Gew.-% auf einen Gehalt im Bereich von 0,8 oder 0,96 Gew.-% bis 1,0 oder bis 1,2 Gew.-%, jeweils bezogen auf die Gesamtmasse. So kann z.B. der Gehalt an Nitrit/Nitrat von Fleisch- und Wurstwaren, die die Formulierung enthalten, um 40 bis 50 % reduziert sein, z.B. auf ca. 40 bis 60 mg/kg Fleisch- und Wurstwaren.

Die Formulierung ist eine Wasser-in-Öl-Emulsion, die
- eine in einer kontinuierlichen Ölphase verteilte wässrige Phase mit oder aus in Wasser verteiltem oder gelöstem hydrophilem Farbstoff, wobei die wässrige Phase einen pH-Wert aufweist, bei dem der Farbstoff gegen erhöhte Temperaturen im Wesentlichen stabil ist, wobei
- die Ölphase, die pflanzliche und/oder tierische Fette und zumindest einen Emulgator, bevorzugt zu 2 bis 8 Gew.-%, bevorzugter zu 4 bis 5 Gew.-% der Ölphase
aufweist oder daraus besteht,
wobei optional in der wässrigen Phase Salze enthalten sind und/oder optional in der wässrigen Phase Verdickungsmittel enthalten sind, insbesondere wenn das Lebensmittel fettreduziert ist.

Das Verhältnis von Wasser zu Öl beträgt z.B. 10:90 bis 50:50, bevorzugt 30:70 Gew.:Gew.

Der hydrophile Farbstoff, der bevorzugt ein natürlicher Farbstoff ist, ist bei dem pH-Wert des Lebensmittels, in das die Formulierung eingebracht wird, gegen erhöhte Temperaturen instabil, zersetzt sich z.B. beim Pasteurisieren.

Die folgenden pH-Werte der wässrigen Phase sind bevorzugt:
Für den Farbstoff Betanin pH maximal 5,5, bevorzugt maximal 4,5, z.B. 3 bis 4, für grünen Pflanzenextrakt (Chlorophyll) als Farbstoff pH minimal 7,5, bevorzugt 7,5 bis 8,5, vorzugsweise pH 8.

Die Fette der Ölphase sind bei den Verarbeitungs- und Lagertemperaturen des Lebensmittels flüssig, insbesondere bei Temperaturen von 0 bis 75°C, bevorzugt bei 5 oder 8 °C, in Abwesenheit des Emulgators, bevorzugt in Anwesenheit des Emulgators. Die Fette können z.B. aus der Gruppe ausgewählt sein, die Sonnenblumenöl, Rapsöl, Sojaöl und Mischungen dieser umfasst. Die kontinuierliche flüssige Ölphase kann eine disperse Feststoffphase enthalten, z.B. Fettkristalle und/oder Organogele.

Der Emulgator hat bevorzugt einen HLB-Wert (Hydrophiler-lipophiler-Gleichgewichtswert) von maximal 6, bevorzugter von maximal 5. Der Emulgator kristallisiert allein oder in Mischung mit den Fetten der Ölphase nicht bei Raumtemperatur. Der Emulgator kann z.B. aus der Gruppe ausgewählt sein, die Phospholipide, Mono- und Diglyceride von Speisefettsäuren, Citronensäureester von Speisefettsäuren, Polyglycerinester, bevorzugt Polyglycerin-Polyricinoleat, und Mischungen von zumindest zweien dieser umfasst oder daraus besteht. Eine Formulierung weist bevorzugt in der Ölphase 0,1 bis 0,5, bevorzugt 0,3 Gew.-% Lysophosphatidylcholin, 1 bis 4, bevorzugt 1,85 Gew.-% Phosphatidylcholin, 0,5 bis 2, bevorzugt 1,0 Gew.-% Phosphatidylethanolamin, 0,1 bis 0,5, bevorzugt 0,3 Gew.-% Phosphoinositol und 0,5 bis 5, bevorzugt 2,5 Gew.-% Citronensäureester von Speisefettsäuren (CITREM) auf, oder der Emulgator besteht daraus. Die Citronensäureester von Speisefettsäuren sind solche, die bei der Temperatur des Öls, in das sie eingemischt werden, flüssig sind, insbesondere bei Raumtemperatur.

Es hat sich gezeigt, dass ein Gehalt an ionischen Salzen in der wässrigen Phase die Stabilität von Chlorophyll erhöhen kann. Daher ist für grüne Pflanzenextrakte mit einem Gehalt an Chlorophyll ein Salzgehalt bevorzugt, der einer Ionenkonzentration 0,1 bis 1,5 Gew.-% NaCl entspricht. Das ionische Salz kann ausgewählt sein aus KCl, MgCl₂, bevorzugt NaCl, und Mischungen dieser.

Das Verdickungsmittel kann z.B. Milchprotein, Gelatine, Johannisbrotkernmehl, Carrageen, Agar-Agar, Pektin und Mischungen dieser umfassen oder daraus bestehen.

Für Fleisch- und Wurstwaren kann die Formulierung mit einem Wasser-Öl-Verhältnis von 10:90 Gew.:Gew. bei 8 Gew.-% Emulgator in einem Anteil von 5 bis 7, bevorzugt 5,5 bis 6,9 Gew.-% enthalten sein.

Das Herstellungsverfahren für die Farbstoffzusammensetzung kann die folgenden Schritte aufweisen oder daraus bestehen:
- Lösen des Farbstoffs in Wasser,
- Einstellen des pH-Werts des Wassers auf einen Wert, bei dem der Farbstoff gegen erhöhte Temperaturen im Wesentlichen stabil ist, zur Herstellung der wässrigen Phase,
- Mischen des Fetts der Ölphase mit dem zumindest einen Emulgator zur Herstellung der Ölphase,
- Temperieren der wässrigen Phase und der Ölphase auf jeweils dieselbe Temperatur, z.B. im Bereich von 20 bis 60 °C, bevorzugt im Bereich von 20 bis 45 °C,
- vor oder nach dem Temperieren, Zusammenbringen der wässrigen Phase und der Ölphase und Herstellen einer Voremulsion mit einer mittleren Tröpfchengröße der wässrigen Phase in der Ölphase von 2 bis 30 µm, z.B. durch Scheren mittels eines an einem Stator rotierenden Rotors,
- Feindispergieren der Voremulsion zur Herstellung der Emulsion mit einer Größenverteilung der Tröpfchen der wässrigen Phase mit einem mittleren Durchmesser von maximal 2µm, bevorzugt maximal 1,5 µm, bevorzugter maximal 1 µm, noch bevorzugter maximal 0,8 µm, insbesondere mit einer geringen Breite der Größenverteilung in der Ölphase, bevorzugt mit einer Größenverteilung von X₉₀ bis X₁₀ von maximal 20 µm, bevorzugter von maximal 15 µm, noch bevorzugter von maximal 10 µm, z.B. mittels Scheren mittels eines an einem Stator rotierenden Rotors oder mittels Hochdruckhomogenisation.

Das Verhältnis von wässriger Phase zu Ölphase kann z.B. 10:90 bis 50:50 Gew.:Gew. betragen, z.B. 10:90, 20:80 bis 30:70, z.B. 50:50.

Das Feindispergieren kann z.B. mittels eines Ultra-Turrax als an einem Stator rotierenden Rotors erfolgen, z.B. bei 22000 Upm für 2 min, oder mittels Hochdruckhomogenisation, z.B. zweistufig bei 80 bis 200 / 50 bar oder mittels einer Kolloidmühle, z.B. bei 500 bis 3000 /min erfolgen.

Die Emulsion, die die Farbstoffzusammensetzung bildet, ist gegen Aggregation stabil und gegen Koaleszenz stabil, z.B. für eine Lagerdauer von zumindest 10d oder zumindest 20d, bevorzugter 6 Monate bei Lagerung im Dunklen bei Raumtemperatur, bevorzugt bei 0 bis 10 °C, bevorzugter bei 5 bis 7 °C.

Dieses Verfahren erzeugt die Größenverteilung der Tröpfchen der wässrigen Phase in der Ölphase. Ein Vorteil des Herstellungsverfahrens und der Größenverteilung der wässrigen Tröpfchen liegt darin, dass dadurch eine mikrobiologische Stabilität erreicht wird, so dass die Formulierung frei von Konservierungsmitteln sein kann und nicht durch physikalische Verfahren haltbar gemacht ist, z.B. nicht durch Bestrahlung, Erwärmung, elektrische Felder oder Hochdruck behandelt wird.

Die Erfindung wird nun anhand von Beispielen mit Bezug auf die Figuren erläutert, die in
- Figur 1 die gemessenen Farbwerte Grün (-a*) von Zusammensetzungen mit Petersilienextrakt in erfindungsgemäßer Formulierung nach der Pasteurisation und
- Figur 2 die gemessenen Farbwerte (a*) für Brühwurst mit Rote-Beete-Pulver in erfindungsgemäßer Formulierung und
- Figur 3 die gemessenen Farbwerte (a*) für Brühwurst mit Rote-Beete-Pulver in erfindungsgemäßer Formulierung und
- Figur 4 die gemessenen Farbwerte (a*) für Brühwurst mit Rote-Beete-Pulver in erfindungsgemäßer Formulierung zeigen.

### Beispiel 1: Brotaufstrich auf Basis von Avocado

Das Fruchtfleisch von Avocados unterliegt bei Kontakt mit Luft einer Braunfärbung, die durch Säurezusatz vermindert werden kann. Als Farbstoff soll grüner Pflanzenextrakt, z.B. aus Petersilie zugesetzt werden, der bei sauren pH-Werten nicht gegen höhere Temperaturen stabil ist, wie sie beim Pasteurisieren auftreten.

Grüner Petersilienextrakt wird zu 10 Gew.-% in 100 g Wasser suspendiert. Bevorzugt weist das Wasser einen Gehalt von 1 Gew.-% NaCl auf. Der pH-Wert wird auf 8,0 eingestellt, z.B. durch Zugabe von verdünnter Natronlauge. Diese wässrige Phase wird mit einer Lösung aus 4 Gew.-% Polyglycerin-Polyricinoleat in Sonnenblumenöl im Verhältnis 30:70 Gew.:Gew., jeweils auf 30 °C temperiert, vereinigt und mittels Scherdispersion durch ein Rotor-Stator-System bei 250 bis 800 Upm zu einer Voremulsion dispergiert. Die Voremulsion wird anschließend mittels eines Hochdruckhomogenisators zweistufig (200 bar / 50 bar) zu der Emulsion dispergiert, die die Formulierung bildet. Die Tröpfchen der wässrigen Phase in der Formulierung hatten eine mittlere Größe (d_{2,3}) von 0,6 µm.
87,75 Gew.-% Avocadopüree,
3,0 Gew.-% Zitronensaft,
1,5 Gew.-% Zwiebelgranulat,
0,75 Gew.-% Knoblauchgranulat,
1,0 Gew.-% Speisesalz,
0,5 Gew.-% gemahlener Pfeffer,
0,5 Gew.-% Johannisbrotkernmehl und
5,0 Gew.-% Formulierung
werden homogen vermischt, um eine erste Zusammensetzung herzustellen und in Gläser abgefüllt. Die Gläser werden mit Deckeln verschlossen und für 10 min auf 72 °C zur Pasteurisierung erwärmt.

Als zweite Zusammensetzung wurde
89,4 Gew.-% Avocadopüree,
3,2 Gew.-% Zitronensaft,
0,8 Gew.-% Zwiebelgranulat,
0,5 Gew.-% Knoblauchgranulat,
0,55 Gew.-% Speisesalz,
0,3 Gew.-% gemahlener Pfeffer,
0,25 Gew.-% Johannisbrotkernmehl und
5,0 Gew.-% Formulierung
homogen gemischt und für 10 min auf 72 °C zur Pasteurisierung erwärmt.

Für eine Vergleichsmischung wurden dieselben Inhaltsstoffe, jedoch anstelle der Formulierung mit Petersilienextrakt, auf pH 8 eingestellt, mit 1 Gew.-% NaCl, gemischt und gleich pasteurisiert. Die Menge an Petersilienextrakt war in der ersten und zweiten Zusammensetzung sowie in der Vergleichsmischung gleich.

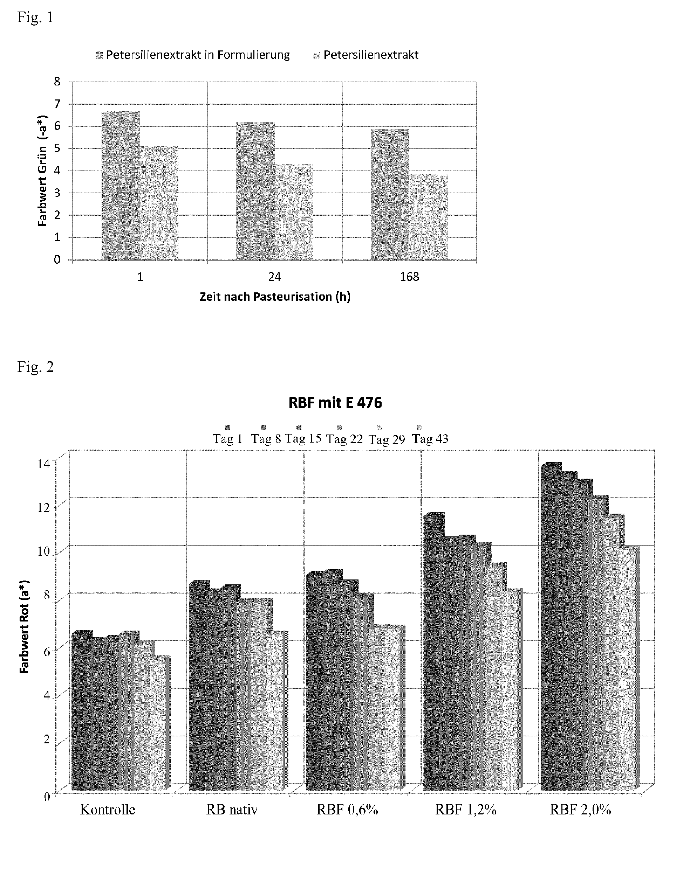

Die Farbwerte für Grün (-a*), in Figur 1 dargestellt, zeigen, dass die erfindungsgemäße Formulierung bzw. die Färbung durch die Formulierung bei der Pasteurisierung im Wesentlichen stabil ist, selbst wenn der enthaltene Farbstoff Chlorophyll bei dem sauren pH der Mischung beim Pasteurisieren seine Farbe verlieren würde, wie dies bei der Vergleichsmischung beobachtet wird. In Figur 1 zeigt die jeweils linke Säule die zweite Formulierung, die rechte Säule die Vergleichsmischung, jeweils nach 1h, 24h, 168h Lagerung bei 4 °C nach der Pasteurisierung.

### Beispiel 2: Brühwurst

Rote-Bete-Pulver wird bei 60°C zu 56 Gew.-% in Wasser suspendiert. Optional wird 0,5 Gew.-% Pektin (CM 203) als Verdickungsmittel zugesetzt. Der pH-Wert wird auf 4,4 eingestellt, um die wässrige Phase herzustellen. Als Emulgator wird Polyglycerin-Polyricinoleat (E476) zu 4 Gew.-% in Sonnenblumenöl gelöst, um die Ölphase herzustellen. Die wässrige Phase und die Ölphase werden auf 45 °C temperiert und im Gewichtsverhältnis 70:30 vereinigt, dann mittels eines Rotor-Stator-Systems bei 500 bis 800 Upm zu einer Voremulsion dispergiert. Die Voremulsion wird mit einem Hochdruckhomogenisator zweistufig 200 bar / 50 bar zu der Emulsion dispergiert, die die Formulierung bildet. Die Tröpfchen der wässrigen Phase in der kontinuierlichen Ölphase hatten eine mittlere Größe (d_{2,3}) von 0,6 µm.

Diese Formulierung wurde zu 0,6, 1,2 oder 2 Gew.-%, bezogen auf die Gesamtmasse, zu einer Wurstmasse aus
40 Gew.-% Schweinefleisch S III,
20 Gew.-% Schweinebauch S V,
10 Gew.-% Schweinebacke S VI,
10 Gew.-% Schweinenackenspeck S VII,
20 Gew.-% Schüttung (Wassereis) und,
jeweils bezogen auf die Gesamtmasse, als Zutaten 1,8 Gew.-% Nitritpökelsalz, 0,3 Gew.-% Natriumdiphosphat, 0,05 Gew.-% Natriumascorbat während des Kutterns zugemischt, um Wurstbrät herzustellen. Das Nitritpökelsalz enthielt 0,5 Gew.-% Natriumnitrit.

Das gekutterte Wurstbrät wurde in Wursthüllen gefüllt und bei einer Kammertemperatur von 80°C auf eine Kerntemperatur von 72 °C erwärmt.

Die gemessenen Farbwerte für Rot (a*), in Figur 2 dargestellt, zeigen, dass die erfindungsgemäße Farbstoffformulierung bei der Behandlung bei höherer Temperatur stabil ist, selbst wenn der enthaltene Farbstoff bei dem pH von ca. 5,8 der Mischung bei der Erwärmung seine Farbe verlieren würde. In Figur 2 stellen die Säulen für jede Konzentration der Rote-Beete-Formulierung (RBF) von links nach rechts den Farbwert nach dem Erwärmen jeweils an Tag 1, Tag 8, Tag 15, Tag 22, Tag 29 und Tag 43 der anschließenden Lagerung bei 4 °C dar. Zum Vergleich wurde dieselbe Wurstmasse, jedoch ohne Fabstoff (Kontrolle) bzw. mit 0,1 Gew.-% Rote-Beete-Pulver, optional in Wasser, (RB nativ) mitgeführt, wobei diese Konzentration gleich der Konzentration des Rote-Beete-Pulvers in 0,6 Gew.-% der Formulierung ist. Das ungefärbte Brät hatte eine sehr geringe Rotfärbung, das Brät mit Rote-Beete-Pulver (RB nativ) eine geringe Rotfärbung, die mit zunehmender Lagerdauer abnahm, während Brät mit erfindungsgemäßer Rote-Beete-Formulierung (RBF 0,6%, RBF 1,2 % und RBF 2,0 %) eine intensivere Rotfärbung aufwies, die auch über die Lagerdauer noch eine ausreichende Intensität hatte. Im Detail zeigte sich, dass die Färbung auch in den Randbereichen der Wurst vorlag. Dies zeigt die Eignung der Formulierung auch für die Herstellung von Lebensmitteln, die bei einer erhöhten Temperatur behandelt werden, da die Randbereiche der Wurst während der Erwärmung der Kammertemperatur ausgesetzt waren, die oberhalb der erreichten Kerntemperatur lag.

In einer alternativen Zusammensetzung wurde die vorgenannte Wurstmasse mit derselben Zusammensetzung, jedoch mit um 40 bis 50 % reduziertem Anteil Nitritpökelsalz (1,08 bis 0,9 Gew.-% Nitritpökelsalz (0,5 Gew.-% Natriumnitrit), bezogen auf die Gesamtmasse) hergestellt. Die fehlende Menge Salz wurde durch Zugabe von 0,4 bis 0,5 Gew.-% Speisesalz (Natriumchlorid) ausgeglichen.

In einer weiteren alternativen Zusammensetzung wurde die vorgenannte Wurstmasse mit 1,8 Gew.-% Nitritpökelsalz oder mit um 40 bis 50 % reduziertem Gehalt Nitritpökelsalz und Zusatz von Speisesalz auf insgesamt 1,8 Gew.-% Nitritpökelsalz und Speisesalz angemischt, wobei jedoch die Fleischbestandteile gegen solche mit geringerem Anteil Muskelfleisch ersetzt wurden. Bei diesem Brät konnte der Zusatz der Formulierung die blassere Färbung der Fleischbestandteile ausgleichen, so dass das Brät eine angenehme Rosa- bis Rotfärbung aufwies.

Dieses Beispiel zeigt auch, dass mit der Formulierung eine ansprechende Färbung der Wurst bei geringerem Anteil Muskelfleisch und/oder bei geringerem Gehalt an Nitritpökelsalz erreicht wird.

### Beispiel 3: Brühwurst

Eine Wurstmasse derselben Zusammensetzung wie in Beispiel 2 wurde mit 0,36 Gew.-%, 0,72 Gew.-% oder 1,20 Gew.-% einer erfindungsgemäßen Formulierung als Farbstoff versetzt, die hergestellt wurde durch
- Lösen von 56 Gew.-% Rote-Beete-Pulver in Wasser bei 60°C,
- Einstellen des pH auf 4,4 zur Herstellung der wässrigen Phase,
- Mischen von Sonnenblumenöl mit 0,3 Gew.-% Lysophosphatidylcholin, 1,85 Gew.-% Phosphatidylcholin, 1,0 Gew.-% Phosphatidylethanolamin, 0,3 Gew.-% Phosphoinositol (zusammenfassend als E322 bezeichnet) und 2,5 Gew.-% Citronensäureester von Speisefettsäuren (E472c),
- Temperieren der wässrigen Phase mit der Ölphase auf 45°C und Mischen im Gewichtsverhältnis wässrige Phase : Ölphase von 70:30,

Dispergieren zur Voremulsion mittels eines Rotor-Stator-Systems bei 500 bis 800 Upm mit anschließendem Feindispergieren mit einem Ultra-Turrax bei 22000 Upm für 2 min, mit einem Hochdruckhomogenisator zweistufig bei 80 bis 200 bar / 50 bar, oder einer Kolloidmühle bei 500 bis 3000 /min.

Das mit der Formulierung versetzte gekutterte Brät wurde in Wursthüllen gefüllt und bei einer Kammertemperatur von 80°C auf eine Kerntemperatur von 72°C erwärmt, anschließend abkühlen gelassen, zu Scheiben geschnitten, in Folie luftdicht verpackt und bei 4°C gelagert.

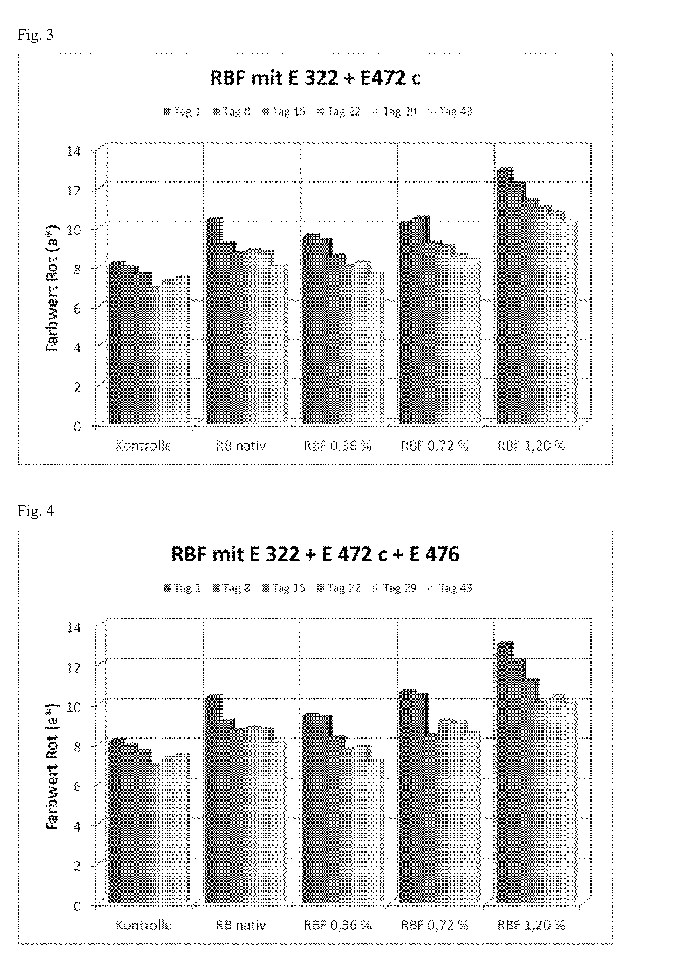

Diese Brühwurst wies eine ausreichend starke und stabile Färbung auf, die intensiver und stabiler war, als das zum Vergleich hergestellte ungefärbte Brät (Kontrolle) oder als Brät mit nativem Rote-Beete-Pulver in Wasser (RB nativ). Die gemessenen Farbwerte a* sind in Figur 3 für die zugegebenen Konzentration an Rote-Beete-Formulierung (RBF) gezeigt, wobei die Säulen von links nach rechts den Farbwert nach dem Erwärmen jeweils an Tag 1, Tag 8, Tag 15, Tag 22, Tag 29 und Tag 43 der anschließenden Lagerung bei 4 °C darstellen. Die Kontrolle war Wurstbrät ohne Farbstoffzusatz, RB nativ war Rote-Beete-Pulver, optional in Wasser, zu 0,1 Gew.-%, wobei diese Konzentration gleich gleich der Konzentration des Rote-Beete-Pulvers in 0,36 Gew.-% der Formulierung ist. Die Ergebnisse zeigen, dass die Formulierung eine über die Lagerdauer stabilere Färbung ergibt.

### Beispiel 4: Brühwurst

Eine Wurstmasse derselben Zusammensetzung wie in Beispiel 2 wurde mit 0,36 Gew.-%, 0,72 Gew.-% oder 1,20 Gew.-% einer erfindungsgemäßen Formulierung als Farbstoff versetzt, die hergestellt wurde durch
- Lösen von 56 Gew.-% Rote-Beete-Pulver in Wasser bei 60°C,
- Einstellen des pH auf 4,4 zur Herstellung der wässrigen Phase,
- Mischen von Sonnenblumenöl mit 0,3 Gew.-% Lysophosphatidylcholin, 1,85 Gew.-% Phosphatidylcholin, 1,0 Gew.-% Phosphatidylethanolamin, 0,3 Gew.-% Phosphoinositol (zusammenfassend als E322 bezeichnet), 0,7 Gew.-% Polyglycerin-Polyricinoleat (E476) und 2,5 Gew.-% Citronensäureester von Speisefettsäuren (E472c),
- Temperieren der wässrigen Phase mit der Ölphase auf 45°C und Mischen im Gewichtsverhältnis wässrige Phase : Ölphase von 70:30,

Dispergieren zur Voremulsion mittels eines Rotor-Stator-Systems bei 500 bis 800 Upm mit anschließendem Feindispergieren mit einem Ultra-Turrax bei 22000 Upm für 2 min, mit einem Hochdruckhomogenisator zweistufig bei 80 bis 200 bar / 50 bar, oder einer Kolloidmühle bei 500 bis 3000 /min.

Das mit der Formulierung versetzte gekutterte Brät wurde in Wursthüllen gefüllt und bei einer Kammertemperatur von 80°C auf eine Kerntemperatur von 72°C erwärmt, anschließend abkühlen gelassen, zu Scheiben geschnitten, in Folie luftdicht verpackt und bei 4°C gelagert.

Diese Brühwurst wies eine ausreichend starke und stabile Färbung auf, die intensiver und stabiler war, als das zum Vergleich hergestellte ungefärbte Brät (Kontrolle) oder als Brät mit nativem Rote-Beete-Pulver in Wasser (RB nativ). Die gemessenen Farbwerte a* sind in Figur 4 für die zugegebenen Konzentration an Rote-Beete-Formulierung (RBF) gezeigt, wobei die Säulen von links nach rechts den Farbwert nach dem Erwärmen jeweils an Tag 1, Tag 8, Tag 15, Tag 22, Tag 29 und Tag 43 der anschließenden Lagerung bei 4 °C darstellen. Die Kontrolle war Wurstbrät ohne Farbstoffzusatz, RB nativ war Rote-Beete-Pulver, optional in Wasser, zu 0,1 Gew.-%, wobei diese Konzentration gleich der Konzentration des Rote-Beete-Pulvers in 0,36 Gew.-% der Formulierung ist. Die Ergebnisse zeigen, dass die Formulierung eine über die Lagerdauer stabilere Färbung ergibt.

## Patentansprüche

1. Temperaturstabile Formulierung mit einem Farbstoff für ein Lebensmittel, die eine Wasser-in-Öl-Emulsion ist, in deren wässriger Phase ein hydrophiler Farbstoff enthalten ist, mit einem Emulgator in der kontinuierlichen Ölphase, **dadurch gekennzeichnet, dass** der Farbstoff bei dem pH-Wert des Lebensmittels bei erhöhter Temperatur instabil ist, die wässrige Phase auf einen pH-Wert eingestellt ist, bei der der Farbstoff bei der erhöhten Temperatur stabil ist und die wässrige Phase eine mittlere Tröpfchengröße von maximal 1,5 µm in der Ölphase aufweist.

2. Formulierung nach Anspruch 1, **dadurch gekennzeichnet, dass** der Farbstoff Betanin enthält und die wässrige Phase einen pH-Wert gleich oder kleiner als 5,5 aufweist.

3. Formulierung nach Anspruch 1 oder 2, **dadurch gekennzeichnet, dass** sie in einem Lebensmittel enthalten ist, dass eine Fleisch- oder Wurstware ist, der eine um 40 bis 50 % reduzierter Zusatz von Nitritpökelsalz zugesetzt wurde.

4. Formulierung nach Anspruch 1, **dadurch gekennzeichnet, dass** der Farbstoff Chlorophyll enthält und die wässrige Phase auf einen pH-Wert von 7,5 bis 8,5 aufweist.

5. Formulierung nach Anspruch 4, **dadurch gekennzeichnet, dass** der Salzgehalt der wässrigen Phase auf eine Ionenkonzentration entsprechend 0,1 bis 1,5 Gew.-% NaCl eingestellt ist.

6. Formulierung nach einem der voranstehenden Ansprüche, **dadurch gekennzeichnet, dass** der Emulgator aus der Gruppe ausgewählt ist, die aus Polyglycerin-Polyricinoleat, Polyglycerinester, Phospolipiden, Mono- und Diglyceriden von Speisefettsäuren, Citronensäureestern von Speisefettsäuren, einer Mischung mit oder bestehend aus Lysophosphatidylcholin, Phosphatidylcholin, Phosphatidylethanolamin, Phosphoinositol und Citronensäureester von Speisefettsäuren (CITREM), und Mischungen dieser besteht.

7. Formulierung nach einem der voranstehenden Ansprüche, **dadurch gekennzeichnet, dass** die wässrige Phase frei ist von einem Hilfslösungsmittel.

8. Formulierung nach einem der voranstehenden Ansprüche, **dadurch gekennzeichnet, dass** die wässrige Phase ein Verdickungsmittel enthält, das aus der Gruppe ausgewählt ist, die Milchprotein, Gelatine, Johannisbrotkernmehl, Carrageen, Agar-Agar, Pektin und Mischungen dieser umfasst.

9. Verfahren zur Herstellung einer Formulierung nach einem der voranstehenden Ansprüche mit den Schritten
- Lösen des Farbstoffs in Wasser,
- Einstellen des pH-Werts des Wassers auf einen Wert, bei dem der Farbstoff gegen erhöhte Temperaturen im Wesentlichen stabil ist, zur Herstellung der wässrigen Phase,
- Mischen des Fetts der Ölphase mit dem zumindest einen Emulgator zur Herstellung der Ölphase,
- Temperieren der wässrigen Phase und der Ölphase auf jeweils dieselbe Temperatur,
- vor oder nach dem Temperieren, Zusammenbringen der wässrigen Phase und der Ölphase und Herstellen einer Voremulsion mit einer mittleren Tröpfchengröße der wässrigen Phase in der Ölphase von 2 bis 30 µm,
- Feindispergieren der Voremulsion zur Herstellung der Emulsion mit einer Größenverteilung der Tröpfchen der wässrigen Phase mit einem mittleren Durchmesser von maximal 2µm.

10. Verfahren nach Anspruch 9, **dadurch gekennzeichnet, dass** der Farbstoff Betanin aufweist und der pH-Wert des Wassers auf 3 bis 5,5 eingestellt wird.

11. Verfahren nach Anspruch 9, **dadurch gekennzeichnet, dass** der Farbstoff Chlorophyll aufweist und der pH-Wert des Wassers auf 7,5 bis 8,5 eingestellt wird.

12. Verfahren nach einem der Ansprüche 9 bis 11, **dadurch gekennzeichnet, dass** die Emulsion als Formulierung des Farbstoffs mit einem Lebensmittel gemischt und anschließend auf eine Temperatur von zumindest 60 °C erwärmt wird, wobei das Lebensmittel einen pH-Wert aufweist, bei dem sich der Farbstoff außerhalb der Formulierung bei zumindest dieser Temperatur zersetzt.

13. Verfahren zur Herstellung von Fleisch- und Wurstwaren, **dadurch gekennzeichnet, dass** eine Formulierung nach einem der Ansprüche 1 bis 3 oder 6 bis 8 einer Fleischmasse zugesetzt wird, während diese gekuttert wird, um Brät zu erhalten und das Brät anschließend auf eine Temperatur von zumindest 60°C erwärmt wird.

14. Verfahren nach Anspruch 13, **dadurch gekennzeichnet, dass** der Fleischmasse ein um zumindest 40 % reduzierter Zusatz an Pökelsalz zugemischt wird.

15. Verfahren nach Anspruch 13 oder 14, **dadurch gekennzeichnet, dass** der Fleischmasse Nitrit entsprechend maximal 0,8 bis 1,2 Gew.-% Pökelsalz mit 0,5 Gew.-% Natriumnitrit, bezogen auf die Gesamtmasse, zugemischt wird.

16. Lebensmittel, **gekennzeichnet durch** einen Gehalt an einer Formulierung nach einem der Ansprüche 1 bis 8, wobei das Lebensmittel auf eine Temperatur von zumindest 72 °C erwärmt worden ist.
